(19) Europäisches Patentamt
European Patent Office
Office européen des brevets

(11) **EP 4 303 413 A1**

(12) **EUROPÄISCHE PATENTANMELDUNG**

(43) Veröffentlichungstag:
**10.01.2024   Patentblatt 2024/02**

(21) Anmeldenummer: 23181459.1

(22) Anmeldetag: **26.06.2023**

(51) Internationale Patentklassifikation (IPC):
*F02C 3/06* (2006.01)          *F02K 3/06* (2006.01)

(52) Gemeinsame Patentklassifikation (CPC):
**F02K 3/06; F02C 3/06;** F05D 2270/301

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **04.07.2022   DE 102022116664**

(71) Anmelder: **MTU Aero Engines AG
80995 München (DE)**

(72) Erfinder:
• **Elorza Gomez, Sergio
  80995 München (DE)**
• **Humhauser, Werner
  80995 München (DE)**
• **Matzgeller, Roland
  80995 München (DE)**

(54)    **TRIEBWERK MIT EINEM VERDICHTER**

(57)    Triebwerk (10), welches einen Fan (11), einen Verdichter (12) mit einem Hochdruckverdichter (112) und eine Brennkammer (13) aufweist. Der Hochdruckverdichter (122) des Triebwerks (10) weist ein mittleres Stufendruckverhältnis ($V_S$) und ein zwischen dem Fan (11) und der Brennkammer (13) ausgebildetes Gesamtdruckverhältnis ($V_G$) auf.

Fig. 1

**Beschreibung**

Die Erfindung betrifft ein Triebwerk, aufweisend einen Fan, einen Verdichter mit einem Hochdruckverdichter und eine Brennkammer, wobei der Hochdruckverdichter ein mittleres Stufendruckverhältnis aufweist und das Triebwerk ein Gesamtdruckverhältnis zwischen Fan und Brennkammer aufweist

Es bestehen Bestrebungen, dass Flugtriebwerke weniger Kraftstoff verbrauchen, weniger Emissionen ausstoßen und zudem auch leiser werden sollen. Hierzu wird beispielsweise angestrebt, einen thermischen Wirkungsgrad des Triebwerks zu erhöhen, indem das Gesamtdruckverhältnis (OPR) des Verdichters erhöht wird, um einen Kraftstoffverbrauch zu verringern. Eine damit verbundene Erhöhung der Temperaturen im Verdichter verlangt nach aerodynamisch langsamer drehenden Verdichtern, was wiederum mehr Verdichterstufen erfordert, um eine ausreichende Lebensdauer für Triebwerkskomponenten zu ermöglichen, insbesondere für Komponenten in einem stromabwärts angeordneten Verdichteraustrittsbereich. Es ist aber bekannt, dass Verdichter mit herkömmlichen Stufendruckverhältnissen und Stufenanzahlen bei reduzierten Hochdruckverdichter-Drehzahlen nicht ihre optimale Effizienz erreichen können.

Hiervon ausgehend ist es eine Aufgabe der vorliegenden Erfindung, ein verbessertes Triebwerk mit insbesondere erhöhtem Gesamtdruckverhältnis bei geringerer Belastung der Hochdruckverdichterstufen vorzuschlagen. Dies wird erfindungsgemäß durch die Lehre des unabhängigen Anspruchs erreicht. Vorteilhafte Ausführungen der Erfindung sind Gegenstand der Unteransprüche.

Zur Lösung der Aufgabe wird ein Triebwerk, aufweisend einen Fan, einen Verdichter mit einem Hochdruckverdichter und eine Brennkammer vorgeschlagen, wobei der Hochdruckverdichter ein mittleres Stufendruckverhältnis Vs aufweist und das Triebwerk ein Gesamtdruckverhältnis $V_G$ zwischen dem Fan und der Brennkammer aufweist. Ein Wert des mittleren Stufendruckverhältnisses Vs ist dabei kleiner als ein um eins (1) erhöhter Wert eines k-fachen eines um eins (1) verringerten Werts des Gesamtdruckverhältnisses $V_G$. Dabei ist k kleiner als 0,008.

Das mittlere Stufendruckverhältnis Vs beträgt in einer Formel ausgedrückt:

$$V_S \ < \ 1 + k * (V_G - 1)$$

Vs      Stufendruckverhältnis
k       Koeffizient
$V_G$   Gesamtdruckverhältnis

Bei einem erfindungsgemäßen Triebwerk ist der Koeffizient k kleiner als 0,008.

Hierdurch kann eine Verringerung einer, insbesondere mittleren, Stufenbelastung bzw. des mittleren Stufendruckverhältnisses Vs für den Hochdruckverdichter erzielt werden, wodurch ein Wirkungsgradvorteil erzielbar ist, der mit einer Reduktion eines Treibstoffverbrauchs einhergehen kann.

Das Triebwerk kann als Mantelstromtriebwerk ausgebildet sein und weist typischerweise einen Fan, einen Verdichter, eine Brennkammer und eine Turbine auf. Mittels des Fans kann Umgebungsluft als Arbeitsfluid angesaugt und zur, insbesondere in Strömungsrichtung fortschreitenden, Druckerhöhung in einem Verdichter komprimiert werden. Der Verdichter weist eine Anzahl an Verdichterstufen auf, die in Strömungsrichtung der Umgebungsluft angeordnet sind. Weiter in Strömungsrichtung des Triebwerks ist nach dem Verdichter die Brennkammer angeordnet, in welcher die komprimierte Umgebungsluft und ein Brennstoff vermischt und entzündet werden, um Verbrennungsgase mit hohem Druck und hoher Temperatur zu erzeugen. Die Verbrennungsgase strömen von der Brennkammer in die Turbine, wo sie sich ausdehnen und dabei Energie abgeben. Durch die Expansion der Verbrennungsgase kann im Turbinenabschnitt eine Rotorwelle angetrieben werden, die beispielsweise (auch) mit einem Generator verbunden ist, um elektrische Energie zu erzeugen. Im Anschluss an die Turbine können die Verbrennungsgase das Triebwerk über einen Abgasauslass verlassen.

Der Verdichter weist insbesondere einen mehrstufigen Hochdruckverdichter und einen diesem in Strömungsrichtung vorgelagerten, insbesondere mehrstufigen, Niederdruckverdichter auf. Der Hochdruckverdichter weist dabei eine Mehrzahl an Verdichterstufen bzw. Hochdruckverdichterstufen auf, die innerhalb eines, insbesondere sich in Strömungsrichtung verjüngenden, Strömungskanals des Triebwerks bzw. im Strom der Umgebungsluft bzw. Arbeitsfluid positioniert sind. Dabei weisen die Verdichterstufen eine an den Strömungskanal des Triebwerks angepasste, in Strömungsrichtung verjüngte Geometrie auf, um eine Kompression des Arbeitsfluids zu erreichen. Jede der Verdichterstufen kann dabei einen um eine Triebwerksachse bzw. Drehachse des Triebwerks rotierbaren Rotor bzw. ein Laufschaufelgitter und einen stromabwärts nachgelagert feststehenden Stator bzw. ein Leitschaufelgitter aufweisen.

Das Gesamtdruckverhältnis $V_G$ des Triebwerks bzw. Gesamtkompressionsverhältnis zwischen Fan und Brennkammer ist hierbei insbesondere das Verhältnis eines Staudrucks des Arbeitsfluids an einer stromabwärtigen Austrittsseite des Verdichters des Triebwerks oder einer stromaufwärtigen Eintrittsseite der Brennkammer zu einem eines Staudruck des Arbeitsfluids an einer stromaufwärtigen Eintrittsseite des Fans bzw. ein Verhältnis eines Totaldrucks des Arbeitsfluids an einem Eintritt in die Brennkammer zu einem Totaldruck des Arbeitsfluids an einem Eintritt des Fans. Der Totaldruck ist hierbei insbesondere der Druck, der sich in einem strömenden Medium bzw. dem Arbeitsfluid an einem Messpunkt einstellt, an dem die Strömungsgeschwindigkeit isentrop bzw. verlustfrei bis nahezu zum Stillstand verringert wird.

Das mittlere Stufendruckverhältnis Vs des Hochdruckverdichters ist eine Potenz des Hochdruckverdichterdruckverhältnisses (Druckverhältnis) $V_{HDV}$ des Verdichters, wobei der Exponent der Potenz der Kehrwert einer Stufenanzahl des Hochdruckverdichters ist. Dies lässt sich mittels folgender Gleichung $G_1$ darstellen:

$$G_1: \quad mittleres\ Stufendruckverhältnis\ V_S = Druckverhältnis\ V_{HDV}^{\ 1/Stufenanzahl}$$

Hierbei ist die Stufenanzahl die Zahl der Hochdruckverdichterstufen des jeweiligen Hochdruckverdichters. Das Hochdruckverdichterdruckverhältnis $V_{HDV}$ bzw. das Gesamtdruckverhältnis $V_{HDV}$ des Hochdruckverdichters ist hierbei insbesondere das Verhältnis eines Staudrucks des Arbeitsfluids an einer stromaufwärtigen Eintrittsseite und einer stromabwärtigen Austrittsseite des Hochdruckverdichters des Verdichters bzw. des Triebwerks.

Um die erfindungsgemäß aufgestellte Bedingung zu erfüllen, muss das Triebwerk bzw. dessen Hochdruckverdichter derart ausgestaltet sein, dass der Wert des mittleren Stufendruckverhältnisses $V_S$ kleiner ist als der um eins erhöhte Wert eines k-fachen (Werts) des um eins verringerten Werts des Gesamtdruckverhältnisses $V_G$. Dies ist mittels der folgenden Gleichung $G_2$ darstellbar:

$$G_2: \quad mittleres\ Stufendruckverhältnis\ V_S < 1 + k * (Gesamtdruckverhältnis\ V_G - 1)$$

Hieraus ergibt sich, dass der Koeffizient k eine Steigung der Geradenfunktion angeben kann.

Damit können Hochdruckverdichter, deren Stufendruckverhältnis $V_S$ über ein Gesamtdruckverhältnis $V_G$ unterhalb der angegebenen Geradenfunktion liegen als die hierin vorgeschlagene Bedingung $G_2$ erfüllend angesehen werden.

Die Erfindung beruht unter anderem auf der Idee, gegenüber bekannten Verdichtern, die Stufenanzahl des Hochdruckverdichters zu erhöhen, um das Gesamtdruckverhältnis $V_G$ des Verdichters erhöhen zu können und gleichzeitig eine, sich insbesondere hieraus ergebende, erhöhte Belastung der Hochdruckverdichterstufen des Verdichters zu reduzieren. Hieraus kann sich ein Wirkungsgradvorteil gegenüber bekannten Verdichtern bzw. Hochdruckverdichtern ergeben, welcher zu einer Reduzierung eines Treibstoffverbrauchs führen kann. Hierdurch kann eine Umweltbelastung durch den Betrieb eines derartig ausgebildeten Triebwerks gesenkt werden.

Bei einer Ausführungsform ist k kleiner als 0,0075. Wird der Koeffizient k kleiner als 0,0075 gewählt kann eine weiter reduzierte Stufenbelastung für den Hochdruckverdichter ermöglicht werden, wobei gleichzeitig eine Steigerung des Gesamtdruckverhältnisses ermöglicht werden kann.

Bei einer Ausführungsform ist k kleiner als 0,007. Durch eine Reduzierung des Koeffizienten k auf einen Wert kleiner als 0,007 kann insbesondere eine weitere Reduzierung der aus dem Betrieb des Triebwerks resultierenden Belastung der Hochdruckverdichterstufen erreicht werden. Bei einer Ausführungsform ist k kleiner als 0,0065. Je kleiner der Koeffizient k gewählt wird bzw. je niedriger das Stufendruckverhältnis $V_S$ ist, um das vorgegebene Kriterium der Gleichung $G_2$ zu erfüllen, desto geringeren Belastungen sind die Komponenten der Hochdruckverdichterstufen im Betrieb des Triebwerks ausgesetzt.

Bei einer Ausführungsform ist k kleiner als 0,006. Wird der Koeffizient k derart gewählt kann insbesondere die Stufenbelastung für einzelne Stufen des Hochdruckverdichters und/oder die Gesamtbelastung für die Stufen weiter verringert werden, um insbesondere eine Lebensdauer der Hochdruckverdichterkomponenten trotz einer Steigerung des Gesamtdruckverhältnisses $V_G$ des Verdichters zu verlängern.

Bei einer Ausführungsform ist das Triebwerk ein Getriebefantriebwerk. Ein Getriebefantriebwerk (Geared Turbo-ofan) ist insbesondere ein Turbofantriebwerk, welches wenigstens ein Getriebe, insbesondere ein Untersetzungsgetriebe zwischen einer ersten Welle und/ oder einer zweiten Welle und einer Fanwelle aufweist. Hierdurch kann eine Drehzahl des Fans gesenkt und eine Drehzahl einer Turbine und/ oder eines Verdichters erhöht werden, wodurch die jeweiligen Komponenten in ihrem jeweiligen optimalen Drehzahlbereich arbeiten können, um insbesondere Verbrauchswerte und Geräuschpegel zu reduzieren.

In Getriebefantriebwerken für Flugzeuge kann der Fan, insbesondere wenigstens eine Fanstufe, über wenigstens eine Turbinenstufe, insbesondere eine Niederdruckturbinenstufe, angetrieben werden, wobei ein zwischengeschaltetes Getriebe, z.B. in Form eines Planetengetriebes, die Drehzahl des Fans gegenüber der wenigstens einen Turbinenstufe herabsetzt. Damit können der Fan und die wenigstens eine Turbinenstufe unabhängig voneinander in jeweils optimierten Drehzahlbereichen betrieben werden.

Bei einer Ausführungsform ist das Gesamtdruckverhältnis $V_G$ größer als 50, insbesondere bis zu 60 betragen.

Ein hohes Gesamtdruckverhältnis $V_G$ kann Vorteile hinsichtlich einer Wirkungsgradverbesserung, einer Reduktion eines Kraftstoffverbrauchs, eines Emissionsausstoßes und/ oder einer Verringerung von Lärmemissionen ermöglichen.

Bei einer Ausführungsform weist der Hochdruckverdichter wenigstens sieben Hochdruckverdichterstufen auf. Insbesondere weist der Hochdruckverdichter wenigstens acht, insbesondere wenigstens neun, insbesondere wenigstens zehn, insbesondere wenigstens elf und insbesondere wenigstens zwölf Hochdruckverdichterstufen auf. Dadurch, dass das Druckverhältnis für den Hochduckverdichter in Abhängigkeit einer vorbestimmten Anzahl an Hochdruckverdichterstufen erhöht werden kann und, wenn die hier vorgeschlagene Bedingung erfüllt ist, gleichzeitig eine Belastung für die Hochdruckverdichterstufen in einem unkritischen Bereich bleiben kann, kann eine Steigerung des thermischen Wirkungsgrads eines erfindungsgemäßen Triebwerks erzielt werden, ohne dabei eine betriebsmäßige Lebensdauer der Hochdruckverdichterkomponenten zu reduzieren.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt

Fig. 1    eine schematische Darstellung eines beispielhaften erfindungsgemäßen Triebwerks; und

Fig. 2    ein Diagramm eines beispielhaften mittleren Stufendruckverhältnisses $V_S$ über ein Gesamtdruckverhältnis $V_G$ eines erfindungsgemäßen Triebwerks.

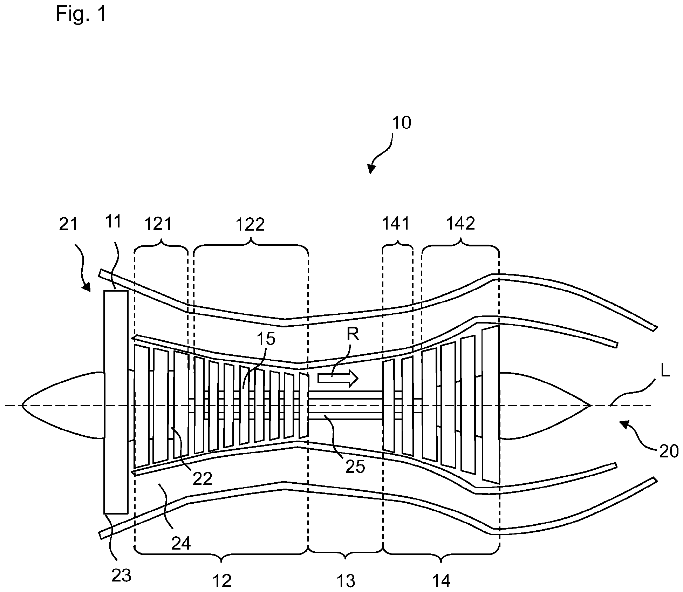

**Fig. 1** zeigt eine beispielhafte Darstellung eines Ausführungsbeispiels eines erfindungsgemäßen Triebwerks 10 in einer schematischen Schnittansicht.

Das Triebwerk 10 ist beispielhaft als Getriebefantriebwerk ausgebildet, wie es in Flugzeugen zur Verwendung kommt. Entlang einer Triebwerksdrehachse L weist das Getriebefantriebwerk 10 in Strömungsrichtung R hintereinander angeordnet einen Lufteintritt 21, einen Fan 11 mit wenigstens einer Fanstufe, ein Getriebe 22, einen Verdichter 12, eine Brennkammer 13, eine Turbine 14 und eine Düse 20 auf. Der Verdichter 12 weist dabei in Strömungsrichtung R aufeinanderfolgend angeordnet einen Niederdruckverdichter 121 und einen Hochdruckverdichter 122 auf. Die Turbine 14 weist in Strömungsrichtung R aufeinanderfolgend angeordnet eine Hochdruckturbine 141 und eine Niederdruckturbine 142 auf. Ein Fangehäuse 23 umgibt den Fan 11 und definiert den Lufteintritt 21.

Das Getriebefantriebwerk 10 ist eingerichtet, in den Lufteintritt 12 eintretende Luft als Arbeitsfluid mittels des Fans 11 zu beschleunigen. Dabei werden zwei Luftströme erzeugt: Ein erster Strom tritt in den Verdichter 12 ein, ein zweiter Luftstrom fließt durch einen Nebenstromkanal 24.

Der Niederdruckverdichter 121 verdichtet den eintretenden ersten Luftstrom, bevor er in den Hochdruckverdichter 122 gelangt, in dem eine weitere Verdichtung erfolgt. Die verdichtete Luft bzw. Luftströmung, die aus dem Hochdruckverdichter 122 austritt, wird in die Brennkammer 13 geführt, wo sie mit Brennstoff vermischt wird und die Mischung dann zur Verbrennung gebracht wird. Die heißen Verbrennungsgase werden in der Hochdruckturbine 141 und in der Niederdruckturbine 142 unter Abgabe von Rotationsenergie an den Turbinenstufen entspannt, bevor sie durch die Düse 20 austreten und dabei zusätzlichen Schub liefern.

Die Hochdruckturbine 141 und die Niederdruckturbine 142 treiben über Wellenvorrichtungen 25 jeweils den Hochdruckverdichter 122 und den Niederdruckverdichter 121 an. Eine Niederdruckwelle treibt den Fan 11 über das Getriebe 22 an. Das Getriebe 22 ist dabei als Untersetzungsgetriebe ausgebildet, das die Drehzahl des Fans 11 gegenüber dem Niederdruckverdichter 121 und der Niederdruckturbine 142 reduziert. Dabei kann das Getriebe 22 beispielsweise als ein Planetengetriebe ausgebildet sein.

Der Hochdruckverdichter 122 weist hierbei ein mittleres Stufendruckverhältnis $V_S$ auf und das Triebwerk 10 weist ein Gesamtdruckverhältnis $V_G$ zwischen dem Fan 11 und der Brennkammer 13 auf. Dabei ist ein Wert des mittleren Stufendruckverhältnisses $V_S$ kleiner als ein um eins erhöhter Wert eines k-fachen Werts eines um eins verringerten Werts des Gesamtdruckverhältnisses $V_G$, wobei der Koeffizient k kleiner als 0,008 ist. Das Gesamtdruckverhältnisses $V_G$ ist ein Verhältnis eines Totaldrucks des Arbeitsfluids bzw. des ersten Luftstroms an einem Eintritt in die Brennkammer 13 zu einem Totaldruck des Arbeitsfluids an einem Eintritt des Fans 11. Das Gesamtdruckverhältnis $V_G$ des Verdichters kann dabei größer als 50 sein, insbesondere bis zu 60 betragen.

Das mittlere Stufendruckverhältnis $V_S$ des Hochdruckverdichters 122 ist eine Potenz des Druckverhältnisses $V_{HDV}$ des Hochdruckverdichters 122, wobei der Exponent der Potenz der Kehrwert einer Stufenanzahl des Hochdruckverdichters 122 ist. Der Hochdruckverdichter 122 des dargestellten Ausführungsbeispiels weist sieben Stufen 15 bzw.

Hochdruckverdichterstufen 15 auf. Demgemäß beträgt die Stufenanzahl bzw. der Wert der Stufenanzahl sieben. Das Druckverhältnis $V_{HDV}$ des Hochdruckverdichters 122 ist das Verhältnis eines Staudrucks des ersten Luftstroms bzw. des Arbeitsfluids an einer stromaufwärtigen Eintrittsseite des Hochdruckverdichters 122 und einer stromabwärtigen Austrittsseite des Hochdruckverdichters 122 des Verdichters 12 bzw. des Triebwerks 10.

Durch die hierin beschriebene Ausgestaltung des Triebwerks 10 kann die Stufenanzahl des Hochdruckverdichters 122 gegenüber bekannten Verdichtern erhöht werden, um das Gesamtdruckverhältnis $V_G$ des Verdichters 12 erhöhen zu können und gleichzeitig eine, sich insbesondere hieraus ergebende, erhöhte Belastung für die Hochdruckverdichterstufen 15 des Verdichters 12 gering halten. Hieraus kann sich ein Wirkungsgradvorteil gegenüber bekannten Verdichtern bzw. Hochdruckverdichtern ergeben, welcher insbesondere zu einer Reduzierung eines Treibstoffverbrauchs führen kann, um beispielsweise eine Umweltbelastung zu senken.

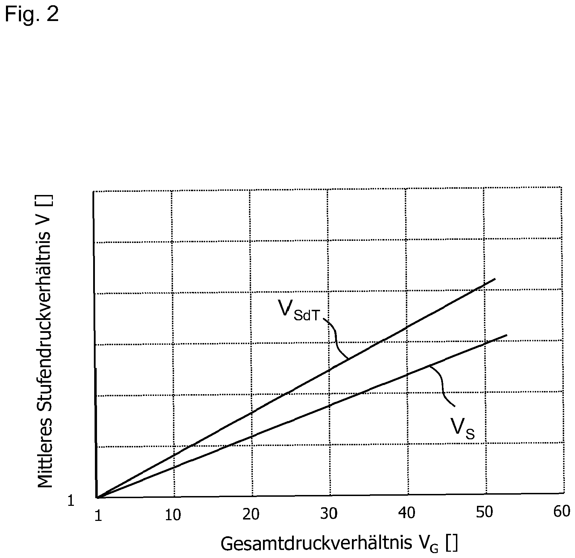

**Fig. 2** zeigt ein Diagramm eines beispielhaften Verlaufs eines mittleren Stufendruckverhältnisses $V_S$ des Hochdruckverdichters 122 des Triebwerks 10 aus Fig. 1 und eines beispielhaften Verlaufs eines mittleren Stufendruckverhältnis $V_{SdT}$ eines aus dem Stand der Technik bekannten Triebwerks. Das Stufendruckverhältnis $V_S$ ist dabei an der y-Achse des Diagramms über ein auf der x-Achse angegebenes Gesamtdruckverhältnis $V_G$ angetragen.

Für das hierin beschriebene Ausführungsbeispiel des Triebwerks 10 gilt:

$$mittleres\ Stufendruckverh\ddot{a}ltnis\ V_S < 1 + k * (Gesamtdruckverh\ddot{a}ltnis\ V_G - 1).$$

Fig. 2 illustriert den Koeffizienten k als eine Steigung einer Geradenfunktion für das mittlere Stufendruckverhältnis $V_S$. Da bekannte Hochdruckverdichter ein höheres mittleres Stufendruckverhältnis $V_{SdT}$ über dem Gesamtdruckverhältnis $V_G$ bzw. deren Darstellung in Form einer Geradenfunktion eine größere Steigung aufweisen, fällt die Stufenbelastung für die einzelnen Stufen und auch eine durchschnittliche Stufenbelastung höher aus, als bei einem Triebwerk 10, welches gemäß einer hierin beschriebenen Ausführungsform ausgebildet ist.

Durch eine Reduzierung des Koeffizienten k kann eine, insbesondere weitere, Reduzierung der im Betrieb des Triebwerks 10 resultierenden Belastung der Hochdruckverdichterstufen 15 erreicht werden. Ist das mittlere Stufendruckverhältnis $V_S$ kleiner als der um eins erhöhte Wert des k-fachen des um eins verringerten Werts des Gesamtdruckverhältnisses $V_G$, und k dabei insbesondere kleiner als 0,0075, insbesondere kleiner als 0,007, insbesondere kleiner als 0,0065, insbesondere kleiner als 0,006, kann eine Stufenbelastung für die Hochdruckverdichterstufen 15 weiter reduziert werden, um ein verbessertes, insbesondere wirkungsgradverbessertes, Triebwerk bereitzustellen.

**BEZUGSZEICHENLISTE**

| | |
|---|---|
| 10 | Triebwerk |
| 11 | Fan |
| 12 | Verdichter |
| 121 | Niederdruckverdichter |
| 122 | Hochdruckverdichter |
| 13 | Brennkammer |
| 14 | Turbine |
| 141 | Niederdruckturbine |
| 142 | Hochdruckturbine |
| 15 | Hochdruckverdichterstufe |
| 20 | Düse |
| 21 | Lufteintritt |
| 22 | Getriebe |
| 23 | Fangehäuse |
| 24 | Nebenstromkanal |
| 25 | Wellenvorrichtungen |
| L | Triebwerksachse |
| V | Druckverhältnis |

**Patentansprüche**

**1.**  Triebwerk (10), aufweisend einen Fan (11), einen Verdichter (12) mit einem Hochdruckverdichter (112) und eine Brennkammer (13), wobei der Hochdruckverdichter (112) ein mittleres Stufendruckverhältnis ($V_S$) aufweist und das Triebwerk (10) ein Gesamtdruckverhältnis ($V_G$) zwischen Fan (11) und Brennkammer (13) aufweist, wobei ein Wert des mittleren Stufendruckverhältnisses($V_S$) kleiner ist als ein um eins erhöhter Wert eines k-fachen eines um eins verringerten Werts des Gesamtdruckverhältnisses ($V_G$), **dadurch gekennzeichnet, dass** k kleiner als 0,008, ist.

2.    Triebwerk (10) nach Anspruch 1, **dadurch gekennzeichnet, dass** k kleiner als 0,0075 ist.

3.    Triebwerk (10) nach einem der vorhergehenden Ansprüche, **dadurch gekennzeichnet, dass** k kleiner als 0,007 ist.

4.    Triebwerk (10) nach einem der vorhergehenden Ansprüche, **dadurch gekennzeichnet, dass** k kleiner als 0,0065 ist.

5.    Triebwerk (10) nach einem der vorhergehenden Ansprüche, **dadurch gekennzeichnet, dass** k kleiner als 0,006 ist.

6.    Triebwerk (10) nach einem der vorhergehenden Ansprüche, **dadurch gekennzeichnet, dass** das Triebwerk (10) ein Getriebefantriebwerk ist.

7.    Triebwerk (10) nach einem der vorhergehenden Ansprüche, **dadurch gekennzeichnet, dass** das Gesamtdruckverhältnis ($V_G$) größer als 50 ist.

8.    Triebwerk (10) nach einem der vorhergehenden Ansprüche, **dadurch gekennzeichnet, dass** der Hochdruckverdichter (122) wenigstens sieben Hochdruckverdichterstufen (15) aufweist.

Fig. 1

Fig. 2

Europäisches
Patentamt

European
Patent Office

Office européen
des brevets

# EUROPÄISCHER RECHERCHENBERICHT

**Nummer der Anmeldung**

EP 23 18 1459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/048826 A1 (POINTON JAMES M [GB] ET AL) 14. Februar 2019 (2019-02-14) <br> * Absatz [0018] - Absatz [0022] * <br> * Absatz [0030] - Absatz [0032]; Ansprüche 15,16,19; Abbildung 1 * <br> ----- | 1-8 | INV. <br> F02C3/06 <br> F02K3/06 |
| X | US 2020/040845 A1 (SWIFT ANDREW [GB]) 6. Februar 2020 (2020-02-06) <br> * Absatz [0032] * <br> * Absatz [0048]; Abbildung 1 * <br> ----- | 1-8 | |

**RECHERCHIERTE SACHGEBIETE (IPC)**

F02C
F02K

Der vorliegende Recherchenbericht wurde für alle Patentansprüche erstellt

| Recherchenort | Abschlußdatum der Recherche | Prüfer |
|---|---|---|
| Den Haag | 15. November 2023 | Robelin, Bruno |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 18 1459

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2023

| Im Recherchenbericht angeführtes Patentdokument | Datum der Veröffentlichung | Mitglied(er) der Patentfamilie | | Datum der Veröffentlichung |
|---|---|---|---|---|
| US 2019048826 A1 | 14-02-2019 | CA | 3013757 A1 | 14-02-2019 |
| | | CN | 109386384 A | 26-02-2019 |
| | | EP | 3444468 A1 | 20-02-2019 |
| | | US | 2019048826 A1 | 14-02-2019 |
| US 2020040845 A1 | 06-02-2020 | CN | 110792525 A | 14-02-2020 |
| | | EP | 3604783 A1 | 05-02-2020 |
| | | US | 2020040845 A1 | 06-02-2020 |

EPO FORM P0461

Für nähere Einzelheiten zu diesem Anhang : siehe Amtsblatt des Europäischen Patentamts, Nr.12/82